# EUROPEAN PATENT APPLICATION

(11) **EP 3 054 659 A1**
(43) Date of publication of application: **10.08.2016**
(21) Application number: 14892055.6
(22) Date of filing: 13.05.2014
(51) Int. Cl.: H04M 1/725

(54) **INFORMATION PROVIDING METHOD AND DEVICE**

(71) Applicant: Huawei Technologies Co. Ltd., Shenzhen, Guangdong 518129 (CN)
(72) Inventor: SUN, Rui, Shenzhen Guangdong 518129 (CN)
(74) Representative: Thun, Clemens
(86) International application number: PCT/CN2014/077386
(87) International publication number: WO 2015/172317

(57) **Abstract**

According to an information providing method and apparatus provided in embodiments of the present invention, available information related to a user task in all applications associated with the user task is recorded, in a form of an information card, into a panoramic view according to a time sequence, where the panoramic view sequentially records all visible user activities that are performed by the user to complete the user task; and information recorded in the panoramic view is presented to the user in an intuitive manner by using a same user interface, so that the user does not need to or barely needs to frequently switch between multiple applications to complete the user task, but performs the user task on a panoramic view, which is intuitive and convenient, and improves working efficiency. In addition, the panoramic view records information of great value to the user, for example, an association relationship between information, a processing process performed during the user carries out the user task, and a detailed time sequence of output results, which avoids information loss.

## Description

### TECHNICAL FIELD

Embodiments of the present invention relate to information and communications technologies, and in particular, to an information providing method and apparatus.

### BACKGROUND

In an existing information management manner, each type of information in user equipment is separately stored in an application to which each type of information belongs.

A mobile phone is used as an example, where existing information is separately stored within each application. For example, a user can view an SMS message list and SMS message content only when the user opens an SMS application of the mobile phone. In a cross-application task scenario, for example, when making a travel plan, a user A needs to interact with a companion B by using SMS messages, search for traffic and weather information online, and further refer to an old travel plan that already exists. In the existing information management manner, the SMS messages between the user A and the companion B are stored in the SMS application and mixed together with SMS messages on other topics, information obtained by online search can only be viewed in a browser, and the old travel plan needs to be read only in a document reader. During a process of making the plan, to complete operations such as acquiring a travel requirement, online search, SMS message exchange, and determining a travel scheme, the user A needs to frequently switch between applications such as the SMS application, the browser, and the document reader to search for and collect information, and such frequent switching and searching reduces working efficiency. In addition, the user A can only organize an association relationship between the collected information in the mind. For example, because the travel requirement includes "avoiding a rainy day", it is required to open the browser to "check weather at the destination", and then a logical relationship between "avoiding a rainy day" and enter the browser to "check weather at the destination" can only be recorded by the user A or memorized by means of limited human short-term memory. Because humans have a limited capability of the short-term memory (humans can handle only five to eight concepts at the same time), this logical information is likely to be lost. Likewise, a process of making a detailed travel plan can only be recorded by the user A or memorized by means of the limited human short-term memory, and consequently, it is likely to cause information loss.

### SUMMARY

Embodiments of the present invention provide an information providing method and apparatus, to resolve problems of information loss and low working efficiency that are exist in a cross-application task scenario.

According to a first aspect, the embodiments of the present invention provide an information providing method, where the method includes:
receiving an information providing command delivered by using a user interface, where the information providing command includes a user task and types of at least two applications associated with the user task and is used to instruct to display, by using a same interface, a processing process that is performed by a user to complete the user task;
searching each associated application for available information that matches the user task, and when the available information is found, generating an information card for the available information according to content and time of the available information, where content of the information card is a part or all of the content of the available information, the content of the information card is configured as a hyperlink, and a target of the hyperlink is the available information;
generating, by using the information cards of all the available information according to the time of all the available information, a panoramic view of the user task based on a time sequence, where the panoramic view records the processing process that is performed by the user to complete the user task; and
reporting and, by using the user interface, displaying the panoramic view.

According to the first aspect, in a first possible implementation manner of the first aspect, the method further includes: receiving an information filtering command delivered by using the user interface;
performing filtering on the information cards in the panoramic view according to the received information filtering command; and
reporting and, by using the user interface, displaying the panoramic view that is obtained after the filtering.

According to the first possible implementation manner of the first aspect, in a second possible implementation manner of the first aspect, the information filtering command includes a keyword; and
the performing filtering on the information cards in the panoramic view according to the received information filtering command includes: searching, according to the keyword, the information cards in the panoramic view for an information card whose content includes the keyword.

According to the first possible implementation manner of the first aspect, in a third possible implementation manner of the first aspect, the content of the information card further includes a type of the information card;
the information filtering command includes an information card type; and
the performing filtering on the information cards in the panoramic view according to the received information filtering command includes: performing the filtering on the information cards in the panoramic view according to the information card type.

According to the first aspect or any one of the first to the third possible implementation manners of the first aspect, in a fourth possible implementation manner of the first aspect, the associated application is at least one of the following: an SMS application, phone, email, a browser, and word processing software.

According to a second aspect, the embodiments of the present invention provide an information providing apparatus, where the apparatus includes:
a receiving module, configured to: receive an information providing command delivered by using a user interface, and transmit the information providing command to a processing module, where the information providing command includes a user task and types of at least two applications associated with the user task and is used to instruct to display, by using a same interface, a processing process that is performed by a user to complete the user task;
the processing module, configured to: obtain the information providing command from the receiving module, search each associated application for available information that matches the user task, and when the available information is found, generate an information card for the available information according to content and time of the available information, where content of the information card is a part or all of the content of the available information, the content of the information card is configured as a hyperlink, and a target of the hyperlink is the available information; where
the processing module is further configured to: generate, by using the information cards of all the available information according to the time of all the available information, a panoramic view of the user task based on a time sequence, and transmit the panoramic view to a reporting module, where the panoramic view records the processing process that is performed by the user to complete the user task; and
the reporting module, configured to: obtain the panoramic view from the processing module, and report and, by using the user interface, display the panoramic view.

According to the second aspect, in a first possible implementation manner of the second aspect, the receiving module is further configured to receive an information filtering command delivered by using the user interface;
the processing module is further configured to perform filtering on the information cards in the panoramic view according to the received information filtering command; and
the reporting module is specifically configured to report and, by using the user interface, display the panoramic view that is obtained after the filtering.

According to the first possible implementation manner of the second aspect, in a second possible implementation manner of the second aspect, the information filtering command includes a keyword; and
the processing module is specifically configured to search, according to the keyword, the information cards in the panoramic view for an information card whose content includes the keyword.

According to the first possible implementation manner of the second aspect, in a third possible implementation manner of the second aspect, the content of the information card further includes a type of the information card;
the information filtering command includes an information card type; and
that the processing module is specifically configured to perform filtering on the information cards in the panoramic view according to the received information filtering command includes: performing the filtering on the information cards in the panoramic view according to the information card type.

According to the second aspect or any one of the first to the third possible implementation manners of the second aspect, in a fourth possible implementation manner of the second aspect, the associated application is at least one of the following: an SMS application, phone, email, a browser, and word processing software.

According to the information providing method and apparatus provided in the embodiments of the present invention, available information related to a user task in all applications associated with the user task is recorded, in a form of an information card, into a panoramic view according to a time sequence, where panoramic view sequentially records all visible user activities (telephone communication, SMS message exchange, document processing, email communication, online search, and the like) that are performed by the user to complete the user task; and information recorded in the panoramic view is presented to the user in an intuitive manner by using a same user interface, so that the user does not need to or barely needs to frequently switch between multiple applications to complete the user task, but performs the user task on a panoramic view, which is intuitive and convenient, and improves working efficiency. In addition, the panoramic view records information of great value to the user, for example, an association relationship between information, a processing process performed during the user carries out the user task, and a detailed time sequence of output results, which avoids information loss.

### BRIEF DESCRIPTION OF DRAWINGS

FIG. 1 is a flowchart of an information providing method according to an embodiment of the present invention;
FIG. 2 is a schematic structural diagram of an information providing apparatus according to an embodiment of the present invention;
FIG. 3 is another schematic structural diagram of an information providing apparatus according to an embodiment of the present invention; and
FIG. 4 is still another schematic structural diagram of an information providing apparatus according to an embodiment of the present invention.

### DESCRIPTION OF EMBODIMENTS

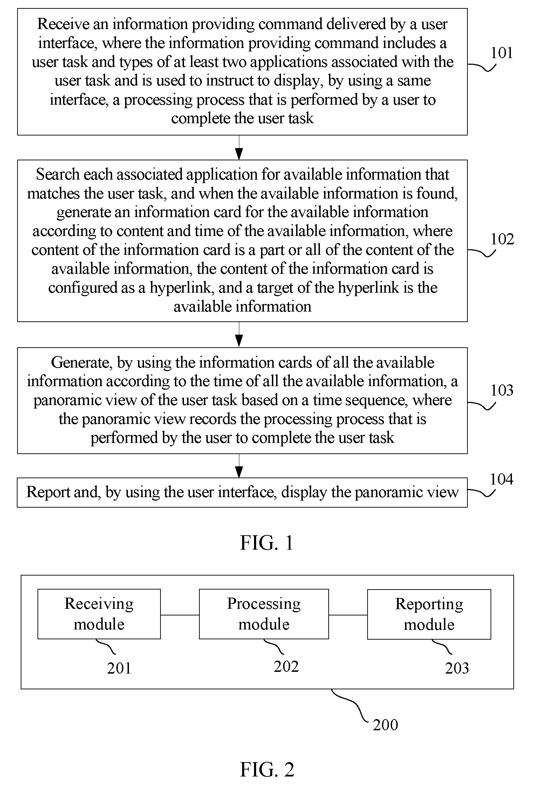

FIG. 1 is a flowchart of an information providing method according to an embodiment of the present invention. As shown in FIG. 1, the information providing method provided in this embodiment of the present invention includes the following steps:
101. Receive an information providing command delivered by using a user interface, where the information providing command includes a user task and types of at least two applications associated with the user task and is used to instruct to display, by using a same interface, a processing process that is performed by a user to complete the user task.

Specifically, the user delivers the information providing command by using a user interface of user equipment.

Optionally, the associated application is at least one of the following: an SMS application, phone, email, a browser, and word processing software.

102. Search each associated application for available information that matches the user task, and when the available information is found, generate an information card for the available information according to content and time of the available information, where content of the information card is a part or all of the content of the available information, the content of the information card is configured as a hyperlink, and a target of the hyperlink is the available information.

Specifically, the information card may be directly used as a micro-window, and the user views corresponding available information by using the micro-window. By tapping/clicking the hyperlink, the user can enter a reading interface of an application corresponding to the content of the information card, and directly view the available information, for example, view a full SMS message. The hyperlink is a cross-application information reference.

103. Generate, by using the information cards of all the available information according to the time of all the available information, a panoramic view of the user task based on a time sequence, where the panoramic view records the processing process that is performed by the user to complete the user task.

Specifically, the panoramic view includes the available information that is in all the applications associated with the user task and that matches the user task, and regardless of a type of an application to which the information belongs, sequentially records, in a form of an information card according to a time sequence, all visible user activities (telephone communication, SMS message exchange, document processing, email communication, online search, and the like) that are performed by the user to complete the user task. Each operation (an operation of using an application) of the user is regarded as a new event, and an information card is generated by extracting available information from the event, and is automatically recorded into the panoramic view. The panoramic view is an intuitive panorama of all related information related to the user task. The information card is the smallest unit in the panoramic view for information organization, and is presented to the user in a form of a card.

Optionally, an association relationship may be established between the information cards in the panoramic view, where the association relationship may be customized by the user, for example, using an association line to indicate the relationship between the information cards; or the association relationship may be generated according to an operation sequence of the user during generation of the panoramic view.

104. Report and, by using the user interface, display the panoramic view.

The information providing method provided in this embodiment of the present invention may be applied to a cross-application task scenario in which a user task involves two or more applications. The method may be performed by an information providing apparatus, where the information providing apparatus may be disposed on the user equipment and has a signal connection to the user interface of the user equipment. The user equipment may be a terminal device such as a smartphone, a tablet computer, and a notebook computer.

In the prior art, each type of information in user equipment is stored separately within an application to which each type of information belongs, and when a user needs to search for a piece of information, the user needs to open an application to which the information belongs. In a cross-application task scenario in which a user task involves multiple applications, to complete the user task, the user needs to frequently switch between the multiple applications to search for and collect information, which reduces working efficiency. In addition, any information (for example, an association relationship between information, a processing process performed during the user carries out the user task, and a detailed time sequence of output results) of great value to the user is not recorded yet.

According to the information providing method provided in this embodiment of the present invention, available information related to a user task in all applications associated with the user task is recorded, in a form of an information card, into a panoramic view according to a time sequence, where panoramic view sequentially records all visible user activities (telephone communication, SMS message exchange, document processing, email communication, online search, and the like) that are performed by the user to complete the user task; and information recorded in the panoramic view is presented to the user in an intuitive manner by using a same user interface, so that the user does not need to or barely needs to frequently switch between multiple applications to complete the user task, but performs the user task on a panoramic view, which is intuitive and convenient, and improves working efficiency. In addition, the panoramic view records information of great value to the user, for example, an association relationship between information, a processing process performed during the user carries out the user task, and a detailed time sequence of output results, which avoids information loss.

Optionally, on the basis of the foregoing embodiment, the user may perform filtering on the information cards included in the panoramic view according to a specific condition, and only an information card that meets the specific condition is displayed by using the user interface. A feasible implementation manner is as follows:
receiving an information filtering command delivered by using the user interface;
performing filtering on the information cards in the panoramic view according to the received information filtering command; and
reporting and, by using the user interface, displaying the panoramic view that is obtained after the filtering.

Further, the information filtering command includes a keyword; the information providing apparatus searches, according to the keyword included in the information filtering command, the information cards in the panoramic view for an information card whose content includes the keyword, and the filtering is performed on the information cards in the panoramic view; and the panoramic view that is obtained after the filtering is reported, and displayed by using the user interface.

Alternatively, further, the content of the information card further includes a type of the information card; the information filtering command includes an information card type; the information providing apparatus performs the filtering on the information cards in the panoramic view according to the information card type in the information filtering command; and the panoramic view that is obtained after the filtering is reported, and displayed by using the user interface.

FIG. 2 is a schematic structural diagram of an information providing apparatus according to an embodiment of the present invention. As shown in FIG. 2, an information providing apparatus 200 provided in this embodiment of the present invention includes:
a receiving module 201, configured to: receive an information providing command delivered by using a user interface, and transmit the information providing command to a processing module 202, where the information providing command includes a user task and types of at least two applications associated with the user task and is used to instruct to display, by using a same interface, a processing process that is performed by a user to complete the user task;
the processing module 202, configured to: obtain the information providing command from the receiving module 201, search each associated application for available information that matches the user task, and when the available information is found, generate an information card for the available information according to content and time of the available information, where content of the information card is a part or all of the content of the available information, the content of the information card is configured as a hyperlink, and a target of the hyperlink is the available information; where
the processing module 202 is further configured to: generate, by using the information cards of all the available information according to the time of all the available information, a panoramic view of the user task based on a time sequence, and transmit the panoramic view to a reporting module 203, where the panoramic view records the processing process that is performed by the user to complete the user task; and
the reporting module 203, configured to: obtain the panoramic view from the processing module 202, and report and, by using the user interface, display the panoramic view.

The information providing apparatus 200 provided in this embodiment of the present invention may be disposed on user equipment. The information providing apparatus 200 may be configured to perform the technical solution in the method embodiment shown in FIG. 1. Implementation principles and technical effects thereof are similar, and details are not described herein again.

Optionally, the receiving module 201 is further configured to receive an information filtering command delivered by using the user interface;
the processing module 202 is further configured to perform filtering on the information cards in the panoramic view according to the received information filtering command; and
the reporting module 203 is specifically configured to report and, by using the user interface, display the panoramic view that is obtained after the filtering.

Further, the information filtering command includes a keyword; and
the processing module 202 is specifically configured to search, according to the keyword, the information cards in the panoramic view for an information card whose content includes the keyword.

Alternatively, further, the content of the information card further includes a type of the information card;
the information filtering command includes an information card type; and
that the processing module 202 is specifically configured to perform filtering on the information cards in the panoramic view according to the received information filtering command includes: performing the filtering on the information cards in the panoramic view according to the information card type.

On the basis of the foregoing embodiment, the associated application is at least one of the following: an SMS application, phone, email, a browser, and word processing software.

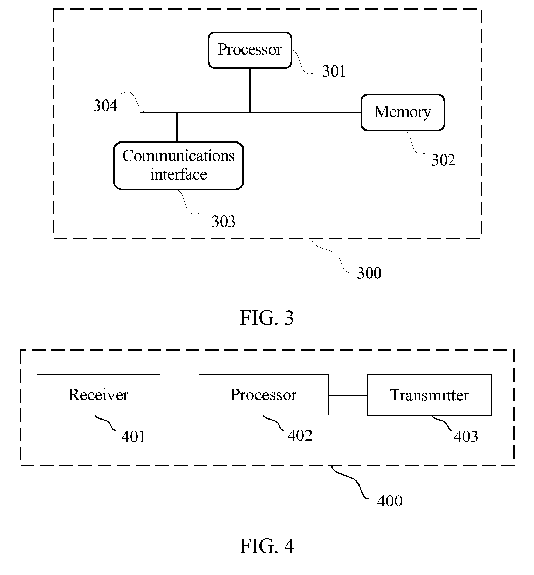

FIG. 3 is another schematic structural diagram of an information providing apparatus according to an embodiment of the present invention. As shown FIG. 3, an information providing apparatus 300 provided in this embodiment of the present invention includes a processor 301, a memory 302, and a communications interface 303, and further includes a communications bus 304, where the processor 301, the memory 302, and the communications interface 303 are interconnected by using the communications bus 304.

The foregoing processor 301 may be a general purpose processor which includes a central processing unit (Central Processing Unit, CPU for short), a network processor (Network Processor, NP for short), or the like; or may be a digital signal processor (DSP), an application-specific integrated circuit (ASIC), a field programmable gate array (FPGA) or another programmable logic component, or a discrete hardware assembly.

The memory 302 is configured to store a program. Specifically, the program may include program code, where the program code includes a computer operation instruction. The memory 302 may include a high-speed RAM, or may further include a non-volatile memory (non-volatile memory), for example, at least one magnetic disk memory.

The communications interface 303 is used for communication between the information providing apparatus 300 and another device. The communications interface can be used to send or receive a data packet.

When the information providing apparatus 300 runs, the processor 301 communicates with the memory 302, and the processor 301 executes the program stored in the memory 302, so as to perform an information providing method provided in any method embodiment of the present invention. Implementation principles and technical effects thereof are similar, and details are not described herein again.

FIG. 4 is still another schematic structural diagram of an information providing apparatus according to an embodiment of the present invention. As shown in FIG. 4, an information providing apparatus 400 provided in this embodiment of the present invention includes:
a receiver 401, configured to receive an information providing command delivered by using a user interface, where the information providing command includes a user task and types of at least two applications associated with the user task and is used to instruct to display, by using a same interface, a processing process that is performed by a user to complete the user task;
a processor 402, configured to search each associated application for available information that matches the user task, and when the available information is found, generate an information card for the available information according to content and time of the available information, where content of the information card is a part or all of the content of the available information, the content of the information card is configured as a hyperlink, and a target of the hyperlink is the available information; where
the processor 402 is further configured to generate, by using the information cards of all the available information according to the time of all the available information, a panoramic view of the user task based on a time sequence, where the panoramic view records the processing process that is performed by the user to complete the user task; and
a transmitter 403, configured to report and, by using the user interface, display the panoramic view.

According to the information providing apparatus provided in this embodiment of the present invention, available information related to a user task in all applications associated with the user task is recorded, in a form of an information card, into a panoramic view according to a time sequence, where panoramic view sequentially records all visible user activities (telephone communication, SMS message exchange, document processing, email communication, online search, and the like) that are performed by the user to complete the user task; and information recorded in the panoramic view is presented to the user in an intuitive manner by using a same user interface, so that the user does not need to or barely needs to frequently switch between multiple applications to complete the user task, but performs the user task on a panoramic view, which is intuitive and convenient, and improves working efficiency. In addition, the panoramic view records information of great value to the user, for example, an association relationship between information, a processing process performed during the user carries out the user task, and a detailed time sequence of output results, which avoids information loss.

Optionally, the receiver 401 is configured to receive an information filtering command delivered by using the user interface;
the processor 402 is further configured to perform filtering on the information cards in the panoramic view according to the received information filtering command; and
the transmitter 403 is specifically configured to report and, by using the user interface, display the panoramic view that is obtained after the filtering.

Further, the information filtering command includes a keyword; and
the processor 402 is specifically configured to search, according to the keyword, the information cards in the panoramic view for an information card whose content includes the keyword.

Alternatively, further, the content of the information card further includes a type of the information card; the information filtering command includes an information card type; and
the processor 402 is specifically configured to perform the filtering on the information cards in the panoramic view according to the information card type.

On the basis of the foregoing embodiment, the associated application is at least one of the following: an SMS application, phone, email, a browser, and word processing software.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An information providing method, comprising:
receiving an information providing command delivered by using a user interface, wherein the information providing command comprises a user task and types of at least two applications associated with the user task and is used to instruct to display, by using a same interface, a processing process that is performed by a user to complete the user task;
searching each associated application for available information that matches the user task, and when the available information is found, generating an information card for the available information according to content and time of the available information, wherein content of the information card is a part or all of the content of the available information, the content of the information card is configured as a hyperlink, and a target of the hyperlink is the available information;
generating, by using the information cards of all the available information according to the time of all the available information, a panoramic view of the user task based on a time sequence, wherein the panoramic view records the processing process that is performed by the user to complete the user task; and
reporting and, by using the user interface, displaying the panoramic view.

2. The method according to claim 1, wherein the method further comprises:
receiving an information filtering command delivered by using the user interface;
performing filtering on the information cards in the panoramic view according to the received information filtering command; and
reporting and, by using the user interface, displaying the panoramic view that is obtained after the filtering.

3. The method according to claim 2, wherein:
the information filtering command comprises a keyword; and
the performing filtering on the information cards in the panoramic view according to the received information filtering command comprises: searching, according to the keyword, the information cards in the panoramic view for an information card whose content comprises the keyword.

4. The method according to claim 2, wherein:
the content of the information card further comprises a type of the information card;
the information filtering command comprises an information card type; and
the performing filtering on the information cards in the panoramic view according to the received information filtering command comprises: performing the filtering on the information cards in the panoramic view according to the information card type.

5. The method according to any one of claims 1 to 4, wherein the associated application is at least one of the following:
an SMS application, phone, email, a browser, and word processing software.

6. An information providing apparatus, comprising:
a receiving module, configured to: receive an information providing command delivered by using a user interface, and transmit the information providing command to a processing module, wherein the information providing command comprises a user task and types of at least two applications associated with the user task and is used to instruct to display, by using a same interface, a processing process that is performed by a user to complete the user task;
the processing module, configured to: obtain the information providing command from the receiving module, search each associated application for available information that matches the user task, and when the available information is found, generate an information card for the available information according to content and time of the available information, wherein content of the information card is a part or all of the content of the available information, the content of the information card is configured as a hyperlink, and a target of the hyperlink is the available information; wherein
the processing module is further configured to: generate, by using the information cards of all the available information according to the time of all the available information, a panoramic view of the user task based on a time sequence, and transmit the panoramic view to a reporting module, wherein the panoramic view records the processing process that is performed by the user to complete the user task; and
the reporting module, configured to: obtain the panoramic view from the processing module, and report and, by using the user interface, display the panoramic view.

7. The apparatus according to claim 6, wherein:
the receiving module is further configured to receive an information filtering command delivered by using the user interface;
the processing module is further configured to perform filtering on the information cards in the panoramic view according to the received information filtering command; and
the reporting module is specifically configured to report and, by using the user interface, display the panoramic view that is obtained after the filtering.

8. The apparatus according to claim 7, wherein:
the information filtering command comprises a keyword; and
the processing module is specifically configured to search, according to the keyword, the information cards in the panoramic view for an information card whose content comprises the keyword.

9. The apparatus according to claim 7, wherein:
the content of the information card further comprises a type of the information card;
the information filtering command comprises an information card type; and
that the processing module is specifically configured to perform filtering on the information cards in the panoramic view according to the received information filtering command comprises: performing the filtering on the information cards in the panoramic view according to the information card type.

10. The apparatus according to any one of claims 6 to 9, wherein the associated application is at least one of the following:
an SMS application, phone, email, a browser, and word processing software.
